# EUROPÄISCHE PATENTSCHRIFT

(11) **EP 1 904 712 B1**
(45) Veröffentlichungstag und Bekanntmachung des Hinweises auf die Patenterteilung: **30.04.2014**
(21) Anmeldenummer: 06777678.1
(22) Anmeldetag: 11.07.2006
(51) Int. Cl.: E06B 9/68

(54) **STEUERVORRICHTUNG FÜR JALOUSIEN AN HOCHBAUTEN**
CONTROL DEVICE FOR BLINDS ON BUILDING CONSTRUCTIONS
DISPOSITIF DE COMMANDE POUR STORES SUR DES BATIMENTS

(30) Priorität: 11.07.2005 DE 102005032550
(43) Veröffentlichungstag der Anmeldung: 02.04.2008
(73) Patentinhaber: Elsner Elektronik GmbH, 75391 Gechingen (DE)
(72) Erfinder: ELSNER, Thomas, 75391 Gechingen (DE)
(74) Vertreter: Daub, Thomas
(86) Internationale Anmeldenummer: PCT/EP2006/064071
(87) Internationale Veröffentlichungsnummer: WO 2007/006775

(56) Entgegenhaltungen:
- EP-A- 1 069 277

## Beschreibung

Die Erfindung betrifft eine Steuervorrichtung für Jalousien an Hochbauten, mit einer Sensoranordnung, die zumindest einen Lichtsensor zur Unterscheidung von Sonnenschein und bedecktem Himmel aufweist.

An Hochbauten, insbesondere größere Bürogebäuden, sind Fensterflächen oftmals mit Jalousien versehen, die lichtabhängig gesteuert werden, d.h. bei stärkerer Sonneneinstrahlung soll die jeweilige Jalousie in einen das Fenster abschattenden Zustand gebracht werden, während die Jalousie einen im wesentlichen unwirksamen Zustand einnehmen soll, wenn der Himmel bedeckt oder die jeweilige Fensterfläche nicht mehr direkter Sonneneinstrahlung ausgesetzt ist.

Bislang ist der notwendige Sensoraufwand vergleichsweise groß. Denn für eine optimale Steuerung der Jalousien muss auch die jeweilige Einfallsrichtung des Sonnenlichtes erfasst werden.

Aufgabe der Erfindung ist es nun, den sensorischen Aufwand deutlich zu vermindern und damit gleichzeitig die Installation der Jalousiesteuerung zu erleichtern.

Diese Aufgabe wird erfindungsgemäß dadurch gelöst, dass die Steuerung Empfangsmittel für ein globales Positionserkennungssystem (GPS) sowie eine Referenzzeit mit Datum aufweist bzw. damit verbunden ist und mittels einer Rechner- und/oder Speicheranordnung zur jeweiligen geodätischen Position zu jedem Zeitpunkt der Referenzzeit den Raumwinkel des Sonnenstandes ermittelt, und dass eine Speichervorrichtung vorgesehen ist, in der Raumwinkelbereiche ablegbar sind, aus denen an einer Jalousie bzw. Jalousiengruppe Sonneneinstrahlung möglich und/oder nicht möglich ist.

Die Erfindung beruht auf dem allgemeinen Gedanken, den jeweiligen Sonnenstand bzw. die jeweils mögliche Einfallsrichtung des Sonnenlichtes aufgrund der ermittelten geodätischen Position des jeweiligen Gebäudes, die bei Installation der Vorrichtung in einem Speicher der Vorrichtung eingelesen oder mittels des globalen Positionserkennungssystems erfasst wird, und der das jeweilige Datum umfassenden Referenzzeit aus gespeicherten Daten zu entnehmen oder rechnerisch zu bestimmen. Das erfindungsgemäße System kennt daher ohne besondere lichtsensorische Maßnahmen die am jeweiligen Ort zur jeweiligen Tageszeit mögliche Einfallsrichtung des Sonnenlichtes. Dabei nutzt die Erfindung die Erkenntnis, dass Empfangsmittel für ein globales Positionserkennungssystem nicht nur bei Bewegungsphasen, etwa bei sich bewegenden Fahrzeugen oder dergleichen, sondern auch bei stationär anzuordnenden Geräten nützlich sein können.

Indem nun erfindungsgemäß außerdem eine Speichervorrichtung vorgesehen ist, in der die Raumwinkelbereiche ablegbar sind, an denen an einer Jalousie bzw. Jalousiengruppe oder an einem Fenster bzw. einer Fenstergruppe Sonneneinstrahlung möglich und/oder nicht möglich ist, "weiß" die erfindungsgemäße Steuervorrichtung, ob bei vorhandenem Sonnenlicht ein Fenster der Sonne ausgesetzt ist oder nicht, so dass die jeweilige Jalousie optimal gesteuert werden kann.

Der lichtsensorische Aufwand ist äußerst gering, da die Sensorik lediglich in der Lage sein muss, Sonnenschein von bedecktem Himmel zu unterscheiden.

Ein besonderer Vorzug der Erfindung liegt darin, dass die erfindungsgemäße Steuerung ohne weiteres weltweit einsetzbar ist und die Installation und insbesondere die Eingabe der Raumwinkelbereiche, an denen an einer Jalousie bzw. Jalousiengruppe oder einem Fenster bzw. einer Fenstergruppe Sonneneinstrahlung möglich und/oder nicht möglich ist, überall in prinzipiell gleicher Weise erfolgen kann.

Gemäß einer zweckmäßigen Ausgestaltung der Erfindung können der Lichtsensor und die Empfangsmittel für das globale Positionserkennungssystem zu einer Einheit zusammengefasst sein, von der die Rechner- und/oder Speicheranordnungen und dergleichen entfernt angeordnet sind.

In besonders zweckmäßiger Weise ist noch ein Windsensor vorgesehen, um gegebenenfalls die Jalousien vor zerstörerischen Windkräften zu schützen, etwa dadurch, dass die Jalousien bei Starkwind in schützende Aufnahmegehäuse eingefahren werden.

Der Windsensor besteht bevorzugt aus stationären Teilen:
In einer nach unten zur Atmosphäre hin offenen Kammer ist ein elektrischer Heizwiderstand angeordnet. Außerdem sind Temperatursensoren zur Erfassung der Temperatur des Heizwiderstandes und der Atmosphäre vorhanden. Wenn der Heizwiderstand mit einem elektrischen Konstantstrom beaufschlagt wird, ist die Differenz zwischen der Temperatur des Heizwiderstandes und der Temperatur der Atmosphäre ein Maß für die Windgeschwindigkeit.

Gegebenenfalls kann auch zusätzlich der Wert des gegebenenfalls schwankenden Heizstromes erfasst und aus dem Verhältnis zwischen der vorgenannten Temperaturdifferenz und dem Wert des jeweiligen Heizstromes ein Maß für die Windgeschwindigkeit ermittelt werden.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher beschrieben wird.

Schutz wird nicht nur für ausdrücklich angegebene oder dargestellte Merkmalskombinationen sondern auch für prinzipiell beliebige Unterkombinationen dieser Merkmale beansprucht.

In der Zeichnung zeigt
Fig. 1 ein Blockschaltbild der erfindungsgemäßen Steuervorrichtung und
Fig. 2 eine schematisierte Darstellung eines Messgerätes für die Windgeschwindigkeit.

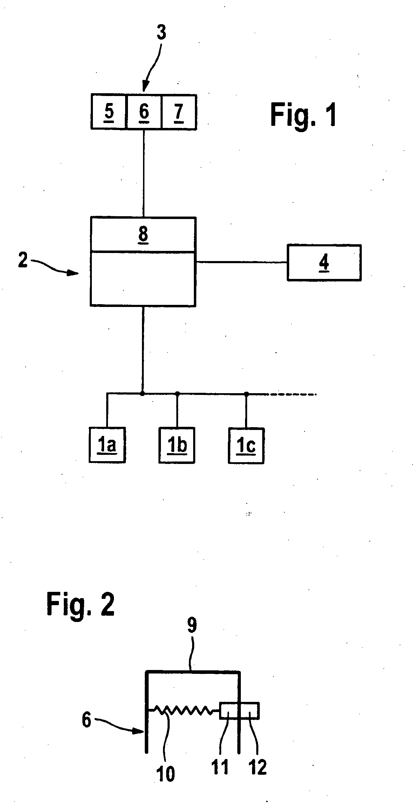

Gemäß Fig. 1 lassen sich nicht dargestellte Jalousien an ebenfalls nicht dargestellten Fenstern eines Gebäudes mit Elektromotoren 1 a, 1 b, 1 c usw. verstellen.

Zur Steuerung dieser Motoren 1 a usw. ist ein Steuergerät 2 vorgesehen.

Eingangsseitig ist das Steuergerät mit einem ersten Eingabegerät 3 sowie einem zweiten Eingabegerät 4 verbunden.

Das erste Eingabegerät 3 ist im Wesentlichen als Sensorstation ausgebildet, die einerseits einen Lichtsensor 5 aufweist, der Sonnenschein von bedecktem Himmel zu unterscheiden vermag. Außerdem besitzt das Eingabegerät 3 in der Regel einen Windsensor 6, der die jeweilige Windstärke zu erfassen vermag. Andererseits ist im Eingabegerät 3 oder gegebenenfalls im Eingabegerät 4 ein Empfänger 7 für ein globales Positionserkennungssystem angeordnet. Aus den Signalen dieses Positionserkennungssystems sind die geodätische Position des Empfängers 7 sowie eine Referenzzeit, einschließlich des jeweiligen Datums, ermittelbar.

Das Steuergerät 3 besitzt eine Rechner- bzw. Speichereinheit 8, die aus diesen Signalen den jeweiligen Sonnenstand und damit die jeweils mögliche Einfallsrichtung des Sonnenlichtes ermittelt. Dies kann rechnerisch erfolgen, indem ein die Erddrehung sowie den Umlauf der Erde um die Sonne widergebendes mathematisches Modell durchgerechnet und daraus der jeweilige Sonnenstand bezüglich der jeweiligen geodätischen Position errechnet wird. Stattdessen ist es auch möglich, in einem Speicher die zeit- und datumsabhängigen Sonnenstände für ein Netzwerk von geodätischen Positionen abzulegen und jeweils auf diesen Speicher zuzugreifen.

Mittels des weiteren Eingabegerätes 4 erhält das Steuergerät 2 Daten darüber, aus welchen Raumwinkelbereichen an der einem der Motoren 1 a usw. zugeordneten Jalousien Sonnenlicht einfallen (oder nicht einfallen) kann. Die entsprechenden Daten können am Eingabegerät 4 manuell eingegeben werden. Bei dieser Eingabe muss der Bediener grundsätzlich keinerlei Rücksicht darauf nehmen, welche Sonnenstände am jeweiligen Ort möglich sind. Vielmehr muss er dem Eingabegerät 4 lediglich "vermitteln", aus welchen Raumwinkelbereichen ein Einfall von Sonnenlicht möglich (oder aufgrund von Gebäudestrukturen nicht möglich) wäre, wenn die Sonne in der jeweiligen Raumwinkelrichtung am Himmel erschiene.

Die entsprechenden Daten werden im Eingabegerät 4 oder im Steuergerät 2 gespeichert.

Damit "weiß" das Steuergerät, ob zu einem bestimmten Zeitpunkt zu einem bestimmten Datum an einer bestimmten, etwa durch einen der Motoren 1 a bis 1 c betätigten Jalousie, ein Einfall von Sonnenlicht möglich ist. Sollte nun der Lichtsensor 5 Sonnenschein melden, kann somit das Steuergerät 2 die jeweilige Jalousie zur Abschattung des jeweiligen Fensters oder dergleichen betätigen. Wenn kein Sonnenschein gemeldet wird, bleibt die jeweilige Jalousie völlig offen.

Für den Fall, dass die Jalousien bei stärkerem Wind beschädigt werden können, berücksichtigt das Steuergerät 2 auch die Signale des Windsensors 6, etwa derart, dass die Jalousien durch Betätigung der Motoren 1 a, 1 b usw. in schützende Gehäuse eingefahren werden, sobald die Windstärke einen Schwellwert überschreitet, und zwar unabhängig davon, ob Sonnenschein gegeben ist oder nicht.

Grundsätzlich kann die Windstärke in an sich bekannter Weise durch sog. Windräder gemessen werden.

Gemäß einer bevorzugten Ausführungsform der Erfindung ist eine Messung der Windstärke auch mit ausschließlich stationären Elementen in folgender Weise möglich:
Innerhalb eines zur Atmosphäre hin, insbesondere nach unten, offenen Gehäuses 9 ist gemäß Fig. 2 ein elektrischer Heizwiderstand 10 angeordnet. Ein erster Temperaturfühler 11 misst die Temperatur des Heizwiderstandes 10. Ein zweiter Temperaturfühler 12 misst die Temperatur der Atmosphäre, d.h. der das Gehäuse 9 umgebenden Luft. Der Heizwiderstand 10 möge nun mit einem elektrischen Konstantstrom beaufschlagt werden, der so bemessen ist, dass der Heizwiderstand 10 bei Windstille in der Umgebung des Gehäuses 9 eine Temperatur erreicht, die um ein vorgegebenes Maß oberhalb der Temperatur außerhalb des Gehäuses 9 liegt. Damit kann die von den Temperaturfühlern 11 und 12 ermittelte Temperaturdifferenz zwischen der Temperatur des Heizwiderstandes 10 und der Au ßentemperatur als Maß für die jeweilige Windstärke benutzt werden.

Das Gehäuse 9 dient in erster Linie als mechanischer Schutz für den Heizwiderstand 10 und kann gegebenenfalls entfallen.

Die Unterteilung des erfindungsgemäßen Systems in das Steuergerät 2 sowie die Eingabegeräte 3 und 4 ist lediglich beispielhaft. Insbesondere das Eingabegerät 4 kann in das Steuergerät 2 integriert sein. Darüber hinaus kann der Empfänger 7 für die Signale des globalen Positionserkennungssystems auch außerhalb des Eingabegerätes 3 angeordnet und beispielsweise in das Eingabegerät 4 oder das Steuergerät 2 integriert sein. Außerdem können die Rechner- bzw. Speichereinheit 8 auch in dem die Empfangsmittel 7 für das globale Positionserkennungssystem aufweisenden Eingabegerät 3 oder 4 angeordnet sein, so dass das jeweilige Eingabegerät den jeweils möglichen Sonnenstand ermitteln und weiterleiten kann. Diese letztere Anordnung ist insbesondere dann zweckmäßig, wenn ein einziges Eingabegerät mit Empfangsmitteln für das globale Positionserkennungssystem einer Vielzahl von Steuergeräten 2 in einer Vielzahl von benachbarten Gebäuden zugeordnet werden soll.

Gegebenenfalls kann die Datenübermittlung zwischen den verschiedenen Geräten drahtlos oder über ein Telefon- oder Datennetz erfolgen.

## Patentansprüche

1. Steuervorrichtung für Jalousien an Hochbauten, mit einer Sensoranordnung (3), die zumindest einen Lichtsensor (5) zur Unterscheidung von Sonnenschein und bedecktem Himmel sowie Empfangsmittel (7) für ein globales Positionserkennungssystem und eine Referenzzeit mit Datum aufweist und mittels einer Rechner- und/oder Speicheranordnung (8) zur jeweiligen geodätischen Position zu jedem Zeitpunkt der Referenzzeit den Raumwinkel des Sonnenstandes ermittelt, und wobei eine Speichervorrichtung vorgesehen ist, in der Raumwinkelbereiche ablegbar sind, aus denen an einer Jalousie oder Jalousiegruppe Sonneneinstrahlung möglich oder nicht möglich ist,
**dadurch gekennzeichnet,**
**dass** die Rechner- und/oder Speicheranordnung (8) dazu vorgesehen ist, die von dem globalen Positionserkennungssystem zur Verfügung gestellte Referenzzeit mit Datum zu erfassen und **gekennzeichnet durch** ein Eingabegerät (4), wobei ein Bediener am Eingabegerät (4) manuell Raumwinkelbereiche eingeben kann, aus denen aufgrund von Gebäudestrukturen ein Einfall von Sonnenlicht möglich oder nicht möglich ist, wenn die Sonne in der jeweiligen Raumwinkelrichtung am Himmel erschiene.

2. Steuervorrichtung nach Anspruch 1,
**dadurch gekennzeichnet,**
**dass** das Empfangsmittel (7) im Eingabegerät (4) angeordnet ist.

3. Steuervorrichtung nach Anspruch 1 oder 2,
**dadurch gekennzeichnet,**
**dass** die Rechner- und/oder Speicheranordnung (2, 8) entfernt von der Sensoranordnung (3) angeordnet ist.

4. Steuervorrichtung nach einem der Ansprüche 1 bis 3,
**gekennzeichnet durch**
einen Windmesser (6), der im Wesentlichen aus einem der Atmosphäre ausgesetzten elektrischen Heizwiderstand (10) sowie einem Temperaturfühler (11) für die Temperatur des Heizwiderstandes und einem Temperaturfühler (12) für die Temperatur der Atmosphäre besteht und als Maß für die Windgeschwindigkeit im Wesentlichen die Differenz der von den Temperaturfühlern ermittelten Temperaturen auswertet.

5. Steuervorrichtung nach Anspruch 1,
**dadurch gekennzeichnet,**
**dass** das Empfangsmittel (7) dazu vorgesehen ist, die ständig von dem globalen Positionserkennungssystem empfangene Referenzzeit mit Datum an die Rechner- und/oder Speicheranordnung (8) zu übermitteln.

6. Steuervorrichtung nach einem der vorhergehenden Ansprüche,
**gekennzeichnet durch**
ein Steuergerät (2), das die Rechner- und Speichereinheit (8) aufweist und dazu vorgesehen ist, zumindest einen Motor (1 a, 1 b, 1 c) der Jalousie bzw. Jalousiengruppe anzusteuern.

7. Steuervorrichtung nach Anspruch 6,
**dadurch gekennzeichnet,**
**dass** das Steuergerät (2) aus den vom Empfangsmittel (7) weitergeleiteten Signalen des globalen Positionserkennungssystems den jeweiligen Sonnenstand und damit die jeweilige Einfallsrichtung des Sonnenlichts ermittelt.

8. Steuervorrichtung zumindest nach Anspruch 6,
**dadurch gekennzeichnet,**
**dass** das Steuergerät (2) dazu vorgesehen ist, zu einer Steuerung des zumindest einen Motors (1 a, 1 b, 1 c) auf in einem Speicher (8) abgelegte zeitund datumsabhängige Sonnenstände für ein Netzwerk von geodätischen Positionen zuzugreifen.

9. Steuerverfahren zum Betrieb einer Steuervorrichtung nach einem der vorhergehenden Ansprüche, wobei eine Rechen- und/oder Speichereinheit (8) der Steuervorrichtung eine geodätische Position und eine Referenzzeit mit Datum mittels eines Empfangsmittels (7) von einem globalen Positionserkennungssystem bezieht und zur jeweiligen geodätischen Position zu jedem Zeitpunkt der Referenzzeit den Raumwinkel des Sonnenstandes ermittelt und wobei ein Bediener mittels einer Eingabeeinheit (4) manuell Raumwinkelbereiche eingibt, aus denen aufgrund von Gebäudestrukturen ein Einfall von Sonnenlicht möglich oder nicht möglich ist, wenn die Sonne in der jeweiligen Raumwinkelrichtung am Himmel erschiene.

## Claims

1. Control apparatus for blinds on building constructions, having a sensor arrangement (3) that has at least one photosensor (5) for distinguishing between sunshine and overcast sky as well as reception means (7) for a global position recognition system and a reference time comprising a date and uses a computer and/or memory arrangement (8) to ascertain the solid angle of the solar altitude for each respective geodetic position and for each instant of the reference time, and wherein a memory apparatus is provided that can be used to store solid angle ranges from which insolation is possible or not possible at a blind or group of blinds, **characterized**
**in that** the computer and/or memory arrangement (8) is provided for the purpose of capturing the reference time comprising a date that is provided by the global position recognition system, and **characterized by** an input appliance (4), wherein an operator can use the input appliance (4) to manually input solid angle ranges from which incidence of sunlight is possible or not possible due to building structures when the sun appears in the sky in the respective solid angle direction.

2. Control apparatus according to Claim 1,
**characterized**
**in that** the reception means (7) is arranged in the input appliance (4).

3. Control apparatus according to Claim 1 or 2,
**characterized**
**in that** the computer and/or memory arrangement (2, 8) is arranged spaced apart from the sensor arrangement (3).

4. Control apparatus according to one of Claims 1 to 3,
**characterized by**
a wind gauge (6) that essentially comprises an electrical heating resistor (10) exposed to the atmosphere and also a temperature sensor (11) for the temperature of the heating resistor and a temperature sensor (12) for the temperature of the atmosphere and, as a measure of the wind speed, essentially evaluates the difference between the temperatures ascertained by the temperature sensors.

5. Control apparatus according to Claim 1,
**characterized**
**in that** the reception means (7) is provided for the purpose of transmitting the reference time comprising a date, which is constantly received from the global position recognition system to the computer and/or memory arrangement (8).

6. Control apparatus according to one of the preceding claims,
**characterized by**
a control appliance (2) that has the computer and memory unit (8) and is provided for the purpose of actuating at least one motor (la, 1b, 1c) of the blind or group of blinds.

7. Control apparatus according to Claim 6,
**characterized**
**in that** the control appliance (2) uses the signals from the global position recognition system that are forwarded by the reception means (7) to ascertain the respective solar altitude and hence the respective incidence direction of the sunlight.

8. Control apparatus at least according to Claim 6,
**characterized**
**in that** the control appliance (2) is provided for the purpose of controlling the at least one motor (la, 1b, 1c) by accessing time-dependent and date-dependent solar altitudes stored in a memory (8) for a network of geodetic positions.

9. Control method for the operation of a control apparatus according to one of the preceding claims, wherein a computer and/or memory unit (8) of the control apparatus obtains a geodetic position and a reference time comprising a date from a global position recognition system using a reception means (7) and ascertains the solid angle of the solar altitude for the respective geodetic position at each instant of the reference time, and wherein an operator uses an input unit (4) to manually input solid angle ranges from which incidence of sunlight is possible or not possible due to building structures when the sun appears in the respective solid angle direction in the sky.

## Revendications

1. Dispositif de commande pour stores sur bâtiments, avec un ensemble (3) de capteurs qui comporte au moins un capteur de lumière (5) qui permet de distinguer entre un ciel ensoleillé et un ciel couvert ainsi que des moyens de réception (7) prévus pour un système global de reconnaissance de position et un temps de référence avec date, et qui détermine au moyen d'un ensemble (8) de calculateur et/ou de mémoire et à chaque instant du temps de référence l'angle solide de la position du soleil pour la position géodésique respective, un dispositif de mémoire étant prévu dans lequel des plages d'angles solides suivant lesquels un ensoleillement est possible ou n'est pas possible sur un store ou un groupe de stores peuvent être memorisées,
**caractérisé en ce que**
l'ensemble (8) de calculateur et/ou de mémoire est prévu pour saisir le temps de référence et la date mis à disposition par le système global de reconnaissance de position,
et **caractérisé par** un appareil d'introduction (4), un opérateur pouvant introduire manuellement à l'appareil d'introduction (4) des plages d'angles spatiaux suivant lesquels la lumière du soleil peut ou ne peut pas entrer du fait de structures de bâtiment lorsque le soleil apparaît dans le ciel dans la direction de l'angle solide respectif.

2. Dispositif de commande selon la revendication 1, **caractérisé en ce que** le moyen de réception (7) est disposé dans l'appareil d'introduction (4).

3. Dispositif de commande selon les revendications 1 ou 2, **caractérisé en ce que** l'ensemble (2, 8) de calculateur et/ou de mémoire est disposé à distance de l'ensemble (3) de capteurs.

4. Dispositif de commande selon l'une des revendications 1 à 3, **caractérisé par** un anémomètre (6) qui comporte essentiellement une résistance électrique chauffante (10) exposée à l'atmosphère, une sonde de température (11) prévue pour la température de la résistance chauffante et une sonde de température (12) prévue pour la température de l'atmosphère, et lequel anémomètre évalue essentiellement la différence entre les températures déterminées par les sondes de température comme mesure de la vitesse du vent.

5. Dispositif de commande selon la revendication 1, **caractérisé en ce que** le moyen de réception (7) est prévu pour transmettre à l'ensemble (8) de calculateur et/ou de mémoire le temps de référence et la date reçus constamment du système global de reconnaissance de position.

6. Dispositif de commande selon l'une des revendications précédentes, **caractérisé par** un appareil de commande (2) qui présente l'ensemble (8) de calculateur et/ou de mémoire et qui est prévu pour commander au moins un moteur (la, 1b, 1c) du store ou du groupe de stores.

7. Dispositif de commande selon la revendication 6, **caractérisé en ce que** l'appareil de commande (2) détermine la respective position du soleil et donc la respective direction d'incidence de la lumière solaire à partir des signaux du système global de reconnaissance de position transmis par le moyen de réception (7).

8. Dispositif de commande selon la revendication 6, **caractérisé en ce que** l'appareil de commande (2) est prévu pour accéder aux positions du soleil dépendantes du temps et date et mémorisées dans une mémoire (8) pour un réseau de positions géodésiques pour commander le ou les moteurs (la, 1b, 1c).

9. Procédé de commande pour opération d'un dispositif de commande selon l'une des revendications précédentes, dans lequel une unité (8) de calcul et/ou de mémoire du dispositif de commande obtient, à l'aide du moyen de réception (7), une position géodésique et un temps de référence avec date d'un système global de reconnaissance de position, et détermine l'angle solide de la position du soleil pour chaque position géodésique et chaque instant du temps de référence, et dans lequel un opérateur introduit manuellement au moyen d'une unité d'introduction (4) des plages d'angles solides suivant lesquels la lumière du soleil peut ou ne peut pas entrer du fait de structures de bâtiment lorsque le soleil apparaît dans le ciel dans la direction de l'angle solid respectif.
